(19)

**Europäisches Patentamt**

**European Patent Office**

**Office européen des brevets**

(11) **EP 4 685 535 A1**

(12) **EUROPEAN PATENT APPLICATION**

(43) Date of publication:
    **28.01.2026 Bulletin 2026/05**

(21) Application number: **25191041.0**

(22) Date of filing: **22.07.2025**

(51) International Patent Classification (IPC):
    **G02B 6/38** *(2006.01)*

(52) Cooperative Patent Classification (CPC):
    **G02B 6/3849; G02B 6/3893;** G02B 6/02328;
    G02B 6/3825; G02B 6/3831

(84) Designated Contracting States:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Designated Extension States:
    **BA**
    Designated Validation States:
    **GE KH LA MA MD TN**

(30) Priority: **22.07.2024 US 202463673894 P**

(71) Applicant: **Corning Research & Development
    Corporation
    Corning, New York 14831 (US)**

(72) Inventors:
    • **CHENG, Xiaole**
      **New York, 14870 (US)**
    • **GREENAWALT, Jeffrey Allen**
      **Pennsylvania, 16901 (US)**
    • **LIU, Jie**
      **New York, 14870 (US)**
    • **WU, Qi**
      **New York, 14870 (US)**
    • **Yuan, Lei**
      **New York, 14870 (US)**

(74) Representative: **Reddie & Grose LLP
    The White Chapel Building
    10 Whitechapel High Street
    London E1 8QS (GB)**

(54) **HOLLOW-CORE OPTICAL FIBER CONNECTOR WITH ONE OR MORE FERRULE SEALS**

(57) A method and system for coupling hollow-core optical fibers. The fiber optic coupling system includes one or more fiber optic connectors, and each of the fiber optic connectors includes a ferrule, a hollow-core optical fiber, and one or more seals. Each ferrule includes an end face, an outer surface that defines a center axis of the ferrule, and a bore with an opening on the end face. Each hollow-core optical fiber is positioned in the bore of a respective ferrule, and each of the one or more seals are operatively coupled to the ferrule and configured to form a sealing interface that isolates the opening of the bore from an external environment when the fiber optic connector is operatively coupled to another component of the system.

**FIG. 11**

EP 4 685 535 A1

## Description

### Priority Application

This application claims the benefit of priority of U.S. Provisional Application No. 63/673,894, filed on July 22, 2024, the content of which is relied upon and incorporated herein by reference in its entirety.

### Technical Field

This disclosure relates generally to optical connectivity, and more particularly to a system and method for interconnecting hollow-core optical fibers.

### Background

Optical fibers are useful in a wide variety of applications, including the telecommunications industry for voice, video, and data transmissions. Benefits of optical fibers include wide bandwidth and low noise operation. Traditional optical fibers include a solid core and a solid cladding that surrounds the core. The core and cladding are typically made of fused silica doped so that the core has a higher index of refraction than the cladding. The core and cladding of the optical fiber are thereby configured to define an optical waveguide that generally confines optical beams propagating through the optical fiber to a region of the optical fiber within and immediately adjacent to the core.

Hollow-core optical fiber is a relatively new type of optical fiber that guides light through a hollow air-filled core rather than through a solid silica core. The latest hollow-core optical fiber designs include an anti-resonant structure that can confine light over a broader range of wavelengths as compared to earlier photonic bandgap hollow-core optical fibers. These anti-resonant structures enable lower-loss transmission over a wider usable wavelength window than previously available from hollow-core optical fibers. A double nested anti-resonant nodeless optical fiber (DNANF) has been reported as having an attenuation level of 0.174 dB/km at 1550 nm, which is comparable to the performance of germanium doped all-glass fibers. In a more recent paper from OFC 2024, a hollow-core DNANF optical fiber was reported as having a loss of less than 0.11 dB/km. Thus, the performance of hollow-core optical fibers has become competitive with traditional solid-core optical fibers for long-haul transmission.

Hollow-core optical fiber has an effective index of refraction similar to that of air. As a result, light propagates through hollow-core optical fiber at essentially the same speed as light in vacuum (300,000 km/sec), which is about 50% faster than the speed at which light typically propagates through solid-core optical fiber (200,000 km/s). Thus, hollow-core optical fiber offers significantly reduced latency compared to solid-core optical fiber. Additional advantages of hollow-core optical fiber over solid-core optical fiber include low nonlinearities, reduced dispersion, and a broad transmission wavelength window.

One problem associated with hollow-core optical fiber is that, due to structural differences between hollow-core and conventional solid-core optical fibers, existing termination processes used with solid-core optical fibers will not function properly with hollow-core optical fibers. For instance, the end face of a hollow-core optical fiber end cannot be polished because the hollow portions of the hollow-core optical fiber would be contaminated by particles from the polishing process. This particulate contamination would then generate excess optical loss. Furthermore, any liquids coming into contact with the end face of a hollow-core optical fiber could wick into core over a significant length of the fiber though the capillary effect, rendering the light guiding mechanism of the hollow-core optical fiber nonfunctional.

Hollow-core optical fibers have been terminated using standard ferrules by carefully positioning the cleaved fiber axially in the bore of a ferrule and bonding the fiber to the bore with an adhesive. Hollow-core optical fibers have also been terminated by securing the fiber to the bore of the ferrule at the rear of the ferrule, and allowing the end face of the optical fiber to float laterally inside the bore of the ferrule. Low insertion losses for hollow-core optical fiber to hollow-core optical fiber connections have been obtained with this simple connector implementation. However, these approaches leave the hollow-cores of the optical fibers exposed. Although there are connector designs incorporating shutters to keep dust from entering the connector housing, they are not designed for water and moisture resistance. Hardened connectors for fiber to the x (FTTX) include weather resistant features, but are too bulky for use in a high density data center environment.

One approach has been to hermetically seal the end of a hollow-core optical fiber either by fusion splicing or bonding to a standard single-mode optical fiber through a mode field adaptor. However, when using this approach, there is no need for directly connectorizing the hollow-core optical fiber. In addition, low loss splicing of hollow-core optical fiber to standard single-mode optical fiber presents significant challenges. For example, hollow-core optical fiber has a much larger mode field diameter (e.g., about 30 $\mu$m) as compared to standard single-mode optical fiber (e.g., about 10 $\mu$m). Spot size conversion based on technologies such as GRIN lenses, thermally expanded core fiber, or tapered fiber are thus required to obtain low insertion loss. At the same time, optical return loss must be managed through a combination of antireflection coatings and tilted glass fiber end faces. Due to the mode field mismatch and component tolerances, the insertion loss for hollow-core optical fiber to standard single-mode optical fiber is substantially higher than that of hollow-core optical fiber to hollow-core optical fiber. Moreover, the complex assembly process required by the above methods of coupling presents a challenge for large scale manufacturing.

In contrast, the insertion loss and return loss for hollow-core optical fiber to hollow-core optical fiber connector is much lower. However, sealing the ends of the hollow-core optical fiber with a window presents other challenges. For example, to avoid strong return losses, the air-glass interface of the window must be tilted from a normal incidence angle to avoid strong return losses, and antireflection coatings on the sealing window are needed to reduce insertion losses. As with the hollow-core to solid core solutions, these complex assembly processes are costly and difficult to scale for high volume applications in hyperscale datacenters.

Thus, there is a need in the fiber optic industry for improved systems and methods of optically coupling hollow-core optical fibers. More particularly, there is a need for systems and methods of operatively coupling hollow-core optical fibers that results in a low-loss connection and prevents contamination.

## Summary

In one aspect of the disclosure, an improved system for coupling hollow-core optical fibers is disclosed. The system includes one or more fiber optic connectors each including a ferrule, a hollow-core optical fiber, and one or more seals. Each ferrule includes an end face, an outer surface that defines a center axis of the ferrule, and a bore with an opening on the end face. The hollow-core optical fiber is positioned in the bore of the ferrule, and each of the one or more seals is operatively coupled to the ferrule and configured to form a sealing interface that isolates the opening of the bore from an external environment when the fiber optic connector is operatively coupled to another component of the system.

In one embodiment of the disclosed system, the other component may be one of a mating adapter, a second fiber optic connector, and a dust cap.

In another embodiment of the disclosed system, the one or more seals may include a face seal operatively coupled to the end face of the ferrule.

In another embodiment of the disclosed system, the end face of the ferrule may include a projection having a surface that is radially symmetric with respect to the center axis, and the face seal may be provided by a circumferential ring defined by an intersection of the bore of the ferrule and the surface of the projection.

In another embodiment of the disclosed system, the hollow-core optical fiber may include a fiber end face, and the hollow-core optical fiber may be positioned in the bore of the ferrule so that the fiber end face is recessed below the circumferential ring.

In another embodiment of the disclosed system, the face seal may include a raised feature defined by depositing a material onto the end face of the ferrule.

In another embodiment of the disclosed system, the one or more fiber optic connectors may include a first fiber optic connector and a second fiber optic connector, and the face seal of the first fiber optic connector may form the sealing interface with the face seal of the second fiber optic connector.

In another embodiment of the disclosed system, the one or more seals may include a shaft seal having an inner surface that is operatively coupled to the outer surface of the ferrule.

In another embodiment of the disclosed system, the shaft seal may have a front surface, and the system may further include a sleeve having an end surface that forms the sealing interface with the front surface of the shaft seal.

In another embodiment of the disclosed system, the outer surface of the ferrule may include a circumferential channel, and the one or more seals may include an O-ring seal positioned in the circumferential channel.

In another embodiment of the disclosed system, the system may further include a sleeve having an inner surface that forms the sealing interface with the O ring seal.

In another embodiment of the disclosed system, each fiber optic connector may include a key, the hollow-core optical fiber may include a fiber end face having a mirror symmetry axis, and the fiber end face may be rotationally oriented so that the mirror symmetry axis thereof is aligned with the key of the fiber optic connector.

In another aspect of the disclosure, an improved method for coupling hollow-core optical fibers is disclosed. The method includes, for each of the one or more fiber optic connectors, positioning the hollow-core optical fiber in the bore of the ferrule, coupling the one or more seals to the ferrule of the fiber optic connector, and configuring the one or more seals to form the sealing interface that isolates the opening of the bore in the end face of the ferrule from the external environment when the fiber optic connector is operatively coupled to the other component of the system.

In one embodiment of the disclosed method, the other component may be one of the mating adapter, the second fiber optic connector, and the dust cap.

In another embodiment of the disclosed method, coupling the one or more seals to the ferrule of the fiber optic connector may include coupling the face seal to the end face of the ferrule.

In another embodiment of the disclosed method, the end face of the ferrule may include the projection having the surface that is radially symmetric with respect to the center axis of the ferrule, and coupling the face seal to the end face of the ferrule may include defining the circumferential ring in the surface of the projection with the bore of the ferrule.

In another embodiment of the disclosed method, the hollow-core optical fiber may be positioned in the bore of the ferrule so that the fiber end face of the hollow-core optical fiber is recessed below the circumferential ring.

In another embodiment of the disclosed method, the face seal may be coupled to the end face of the ferrule by depositing a material onto the end face of the ferrule.

In another embodiment of the disclosed method, the one or more fiber optic connectors may include the first fiber optic connector and the second fiber optic connector, and the method may further include forming the sealing interface by urging the face seal of the first fiber optic connector into engagement with the face seal of the second fiber optic connector.

In another embodiment of the disclosed method, the one or more seals may include the shaft seal, and the method may further include operatively coupling the inner surface of the shaft seal to the outer surface of the ferrule.

In another embodiment of the disclosed method, the method may further include forming the sealing interface between the end surface of the sleeve and the front surface of the shaft seal.

In another embodiment of the disclosed method, the method may further include positioning the O-ring seal in the circumferential channel of the ferrule.

In another embodiment of the disclosed method, the method may further include forming the sealing interface between the inner surface of the sleeve and the O-ring seal.

In another embodiment of the disclosed method, the method may further include rotationally orienting the hollow-core optical fiber so that the mirror symmetry axis is aligned with the key of the fiber optic connector.

## Brief Description of the Drawings

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.

Fig. 1 is a cross-sectional view of an exemplary hollow-core optical fiber.

Fig. 2 is a perspective view of an exemplary fiber optic connector including another exemplary hollow-core optical fiber.

Fig. 3 is an exploded perspective view of the fiber optic connector shown in Fig. 2.

Fig. 4 is a cross-sectional view of an exemplary ferrule that may be used with the fiber optic connector shown in Figs. 2 and 3.

Fig. 5 is a cross-sectional view of an alternative embodiment of the ferrule shown in Fig. 4.

Fig. 6 is a perspective view of an alternative embodiment of the connector shown in Figs. 2 and 3 that includes a connector key.

Fig. 7 is a plane view of the connector shown in Fig. 6 showing an orientation of the hollow core optical fiber with respect to the key.

Figs. 8 and 9 are a photographic views of a cleaved end face of an exemplary hollow-core optical fiber.

Figs. 10 and 11 are cross-sectional views of a pair of exemplary connectors showing engagement of their respective ferrules when the connectors are coupled through a mating adapter.

Figs. 12 and 13 are perspective views of an exemplary embodiment of a ferrule that may be used with the connectors of Figs. 2, 3, 6, 7, 10, and 11 and that includes a circumferential channel and O-ring seal.

Fig. 14 is a perspective view of two of the ferrules shown in Figs. 12 and 13 operatively coupled using a sleeve.

Fig. 15 is a diagrammatic cross-sectional view of a computer model of two ferrules each including a face seal in contact with the face seal of the other ferrule.

Fig. 16 is a graphical view of the model of Fig. 15 showing a distribution of mechanical stress in each of the ferrules.

Figs. 17 and 18 are diagrammatic views showing details of a sealing interface between the two ferrules of Figs. 15 and 16.

Fig. 19 is a diagrammatic view of a model for two optically coupled hollow-core optical fibers.

Fig. 20 is a graphical view showing the intensity of a beam of light propagating through the coupling based on a computer simulation of the model of Fig. 19.

Fig. 21 is a graphical view showing a cross-sectional view of the intensity of the beam of light of Fig. 20.

## Detailed Description

Various embodiments will be further clarified by examples in the description below. In general, the description relates to a system and method of terminating a hollow-core optical fiber that avoids the need to hermetically seal the hollow-core fiber end-face. Embodiments of the system include one or more seals that protect the hollow-core optical fiber end faces from contamination by dust, moisture, and liquids. The seals may include a face seal that operates based on physical contact between raised features on the end faces of the ferrules. Another type of seal is based on a deformable shaft seal in the connector that forms a sealing interface with a mating adaptor or a dust cap. Yet another type of seal is based on an O-ring seal that forms a sealing interface between the outer surface of the ferrule and the inner surface of a sleeve.

Embodiments of the disclosed system provide a simpler design and lower insertion loss than known solutions that involve capping the ferrule end faces with transparent windows, and provide higher reliability than systems using hollow-core fiber optic connectors that lack seals. Advantageously, the above described sealing features may be incorporated into the hollow-core optical fiber ferrule and connector utilizing existing connector components. The disclosed features protect the hollow-core optical fiber end face from both dust contamination and liquid contamination by isolating the hollow-core optical fibers from the external environment in which the connectors are deployed.

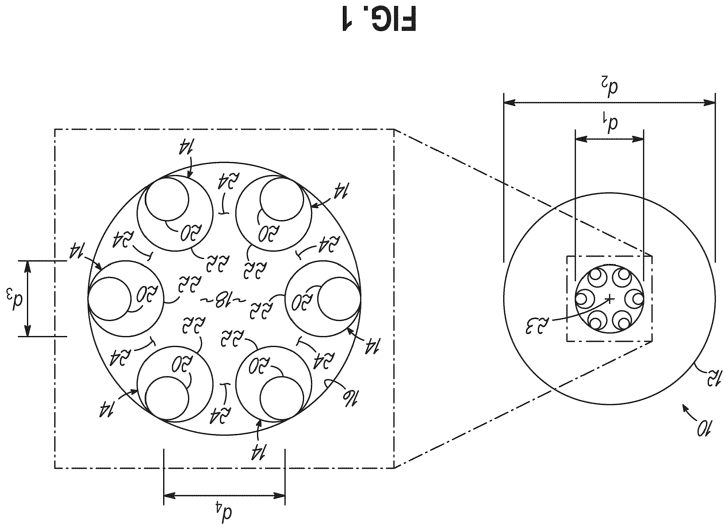

Fig. 1 depicts an axial cross-sectional view of an exemplary embodiment of a hollow-core optical fiber 10. The hollow-core optical fiber 10 includes a cladding 12 and a plurality of structural tubes 14. The cladding 12 includes an inner surface 16 on which the structural tubes 14 are arranged circumferentially to define a hollow-core 18. The depicted embodiment includes six structural tubes 14 each having a nested structure comprising an inner tube 20 and an outer tube 22. However, it should be understood that the fiber optic coupling systems and methods disclosed herein may be used with hollow-core optical fibers 10 having other numbers of structural tubes 14, as well as structural tubes 14 that comprise a single tube (i.e., unnested structural tubes 14) or include more than two nested tubes. Embodiments of the disclosed coupling systems may also be used with other types of hollow-core optical fiber 10, such as but not limited to, photonic crystal fibers and photonic-bandgap fibers.

The cladding 12 and structural tubes 14 may be formed, for example, of doped or undoped silica glass. The cladding 12 may have an inner diameter $d_1$ and an outer diameter $d_2$, and the structural tubes 14 may have an outer diameter $d_3$. The dimensions of the cladding 12 and structural tubes 14 may be selected so that the hollow-core 18 has a diameter $d_4$. The diameter $d_4$ of the hollow-core 18 may be defined, for example, as twice the minimum distance between the surface of each structural tube 14 and an optical axis 23 of the hollow-core optical fiber 10. The dimensions of the cladding 12 and structural tubes 14 may be selected so that adjacent structural tubes 14 are separated by a gap 24. The gap 24 may prevent adjacent structural tubes 14 from contacting each other. The presence of the gap 24 may thereby avoid the formation of a waveguide along a line of contact between the structural tubes 14 due to a doubling of the wall thickness of the structural tubes 14 where the structural tubes 14 come into contact.

The dimensions and other characteristics of the cladding 12 and structural tubes 14 (e.g., the refractive index or indices) may be selected to define a waveguide that generally confines optical beams propagating through the hollow-core optical fiber 10 to the hollow-core 18 itself. The thicknesses of the walls of the structural tubes 14 may be selected to provide an anti-resonant effect that reduces leakage of optical beams from the hollow-core 18 into the structural tubes 14. This anti-resonant effect may be optimized by providing the structural tubes 14 with a wall thickness that is an odd multiple of a quarter wavelength of the optical beam. In an exemplary embodiment of the depicted hollow-core optical fiber 10, $d_1$ may be about 100 $\mu$m, $d_2$ may be about 250 $\mu$m, $d_3$ may be about 30 $\mu$m, and $d_4$ may be about 40 $\mu$m. However, it should be understood that the fiber optic coupling systems and methods disclosed herein are not limited to hollow-core optical fibers 10 having a particular set of structural dimensions.

Hollow-core optical fibers 10 may have different structures, which include unnested anti-resonant hollow-core optical fiber 10, single nested anti-resonant hollow-core optical fiber 10 (depicted by Fig. 1), and multiple nested (e.g., double nested) anti-resonant hollow-core optical fiber 10. One type of hollow-core optical fiber 10 manufactured for internal use by Corning Inc, an optical technology company headquartered in Corning, New York, United States, has a nominal mode field diameter of 32 $\mu$m. This mode field diameter is larger than those reported for hollow-core optical fibers 10 in the literature, which typically have a mode field diameter in the range of between about 10 $\mu$m to 22 $\mu$m for double nested anti-resonant nodeless optical fiber, and between about 22 $\mu$m to 28 $\mu$m for single nested anti-resonant nodeless fiber.

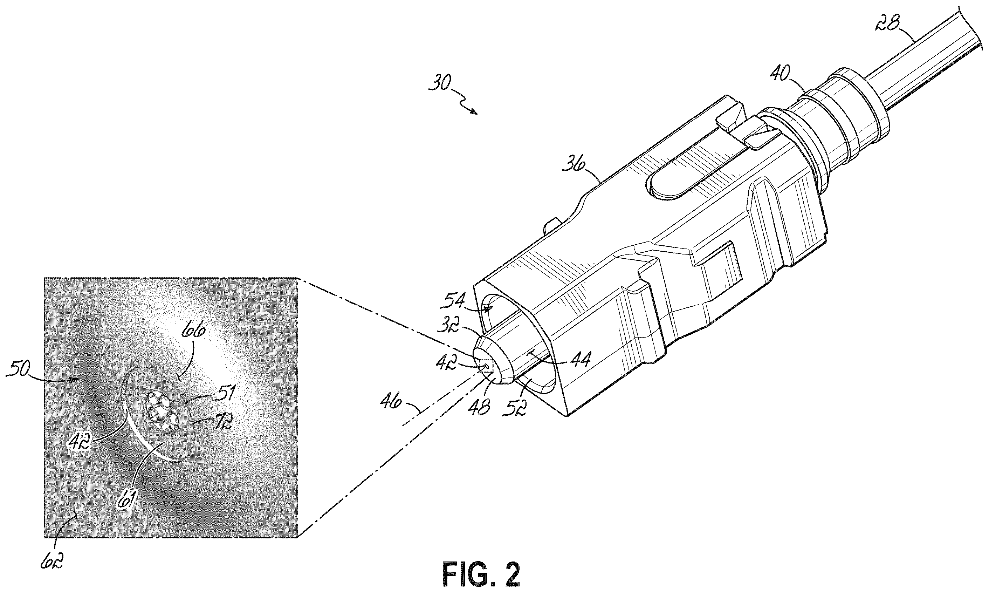

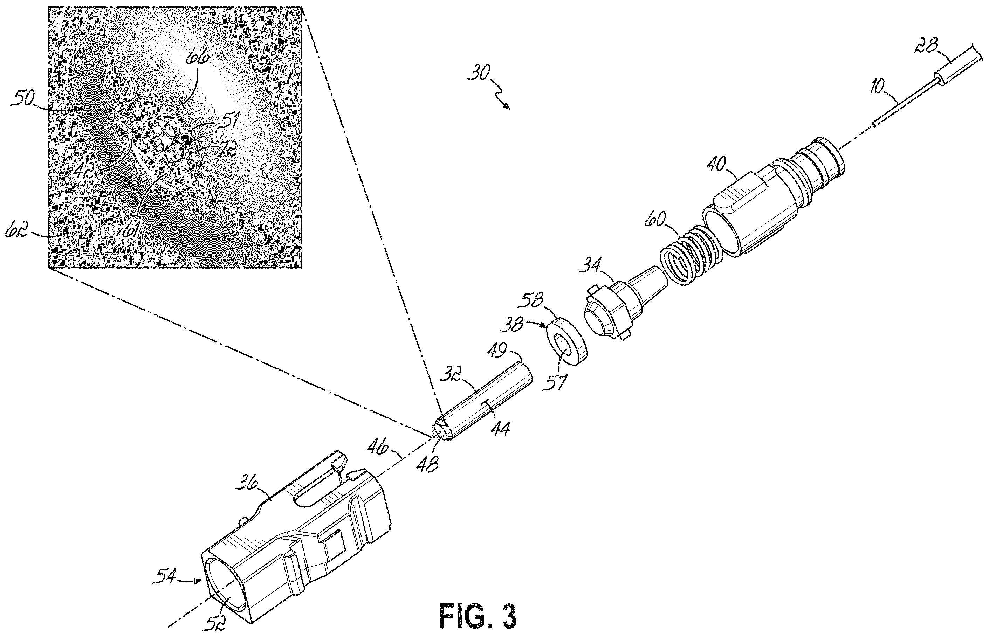

Figs. 2 and 3 illustrate an exemplary fiber optic connector 30 including a multi-seal design that may be used to provide connections between hollow-core optical fibers 10. Although the fiber optic connector 30 is shown in the form of a SC-type connector, the depicted features may be applicable to other connector designs, such as, but not limited to ST, LC, and MU-type connectors. The fiber optic connector 30 may terminate a fiber optic cable 28 including a hollow-core optical fiber 10. The fiber optic connector 30 may include a ferrule 32, a ferrule holder 34, a housing 36, a shaft seal 38, and a connector body 40. The ferrule 32 may include a bore 42 (e.g., micro-bore) configured to support a hollow-core optical fiber 10, a cylindrically shaped outer surface 44 that defines a longitudinal center axis 46 of the ferrule 32, a front ferrule end face 48 having a projection 50 that extends outward from the ferrule 32, and a rear ferrule end face 49. The ferrule bore 42 may include front opening 51 in the front ferrule end face 48 and a rear opening 53 in the rear ferrule end face 49. The ferrule 32 may be formed from a ceramic material or composite polymer such as polyphenylene sulfide, and may be fabricated using an injection molding process, for example.

The housing 36 includes an inner surface 52 that defines a cavity 54. The cavity 54 may be configured to receive the ferrule 32, ferrule holder 34, and shaft seal 38. The shaft seal 38 may include an aperture 56 configured to receive the ferrule 32, a front surface 57, and a circumferential surface 58. The circumferential surface 58 may be configured to engage an inner surface 52 of housing 36. The shaft seal 38 may be positioned between the ferrule 32 and ferrule holder 34 so that the ferrule 32 extends from the ferrule holder 34, through the aperture 56 of shaft seal 38, and into the cavity 54. The aperture 56 of shaft seal 38 may be configured to receive the ferrule 32 and form a sealing interface with the outer surface 44 thereof. The shaft seal 38 may be made from any highly elastomeric and water resistant material, such as a silicone gel, a rubber polymer extended with oil as silicone, a fluoroelastomer (e.g., Viton, which is available from the Chemours Company of Wilmington, Delaware, United States), or any other suitable material, such as a material having a hardness of less than Shore A 40.

The connector body 40 may be configured to cooperate with the housing 36 to retain the ferrule 32 and ferrule holder 34 within the housing 36. More specifically, a back end of the ferrule 32 may be received in a front portion of the ferrule holder 34 and secured therein in a known manner (e.g., using a press-fit, adhesive, molding the ferrule holder 34 over the back end of the ferrule 32, etc.). The ferrule 32 and ferrule holder 34 may be a monolithic structure in some connectors.

The ferrule holder 34 may be biased to a forward position within the housing 36 by a spring 60 that extends over a rear portion of the ferrule holder 34. The rear portion of the ferrule holder 34 may have a reduced cross-sectional diameter or width as compared to the front portion. The spring 60 may also interact with the internal geometry of the connector body 40, which may be secured to the housing 36 using a snap-fit or the like. For example, Figs. 2 and 3 illustrate a rear portion of the housing 36 having cut-outs or slots on opposite sides so as to define a split shroud. The connector body 40 may have tabs configured to be snapped into the slots and retained therein due to the geometries of the components.

When the fiber optic connector 30 is assembled as shown in Fig. 2, and as described in more detail below, the front ferrule end face 48 of ferrule 32 may project beyond a front end of the housing 36. The front ferrule end face 48 presents the hollow-core optical fiber 10 for optical coupling with a mating component, e.g., another fiber optic connector 30 (not shown). The ferrules 32 of two fiber optic connectors 30 may be coupled to each other using a mating adapter including a sleeve configured to receive the ferrules 32. Thus, when the fiber optic connector 30 is mated with the other component, the end face 61 of hollow-core optical fiber 10 may be held in alignment with the end face 61 of another hollow-core optical fiber 10 held by the sleeve of the mating adapter to establish an optical connection.

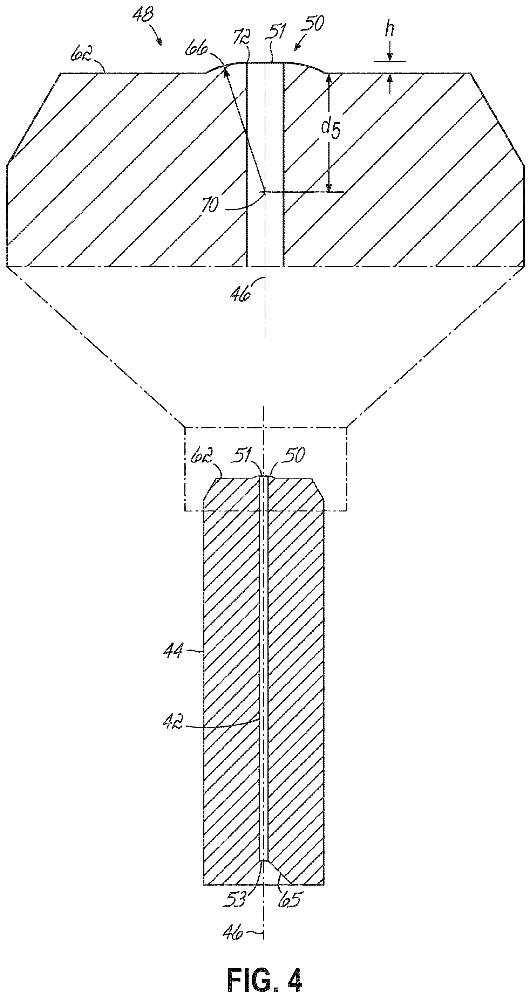

Referring now to Fig. 4, and with continued reference to Figs. 2 and 3, The projection 50 of the front ferrule end face 48 may extend from a base surface 62 thereof, and the rear ferrule end face 49 may include a tapered inlet 65. The tapered inlet 65 may be configured to facilitate insertion of the hollow-core optical fiber 10 into the bore 42. The projection 50 may include a surface 66 that is radially symmetric with respect to the center axis 46 of ferrule 32. By way of example only, the surface 66 of projection 50 may be shaped like a spherical cap with a radius of curvature R and a center of radius 70. The center of radius 70 may be positioned on the center axis 46 of ferrule 32 at an offset distance d from the base surface 62. The radius of curvature R may be preferably less than about 1000 $\mu$m, and more preferably between about 200 $\mu$m and about 600 $\mu$m. The projection 50 may have a height h slightly less than the difference between the radius of curvature R and the center offset distance $d$, i.e., $h \approx R - d$.

In the depicted embodiment, a face seal 72 is provided by a circumferential ring defined by the intersection of the ferrule bore 42 and surface 66 of projection 50. The face seal 72 may have the shape of a closed simple planar curve (e.g., a circle centered on the center axis 46 of ferrule 32) and be longitudinally offset from the base surface 62 of front ferrule end face 48 by the height $h$ of projection 50. The projection 50 may be formed during a molding process used to fabricate the ferrule 32, deposited onto or machined into the ferrule 32 after fabrication thereof, or defined in any other suitable manner.

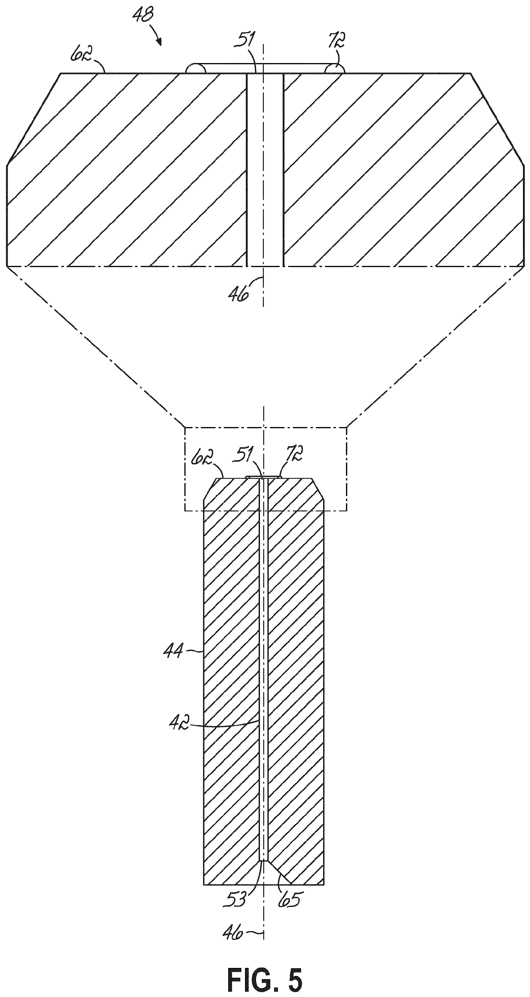

Fig. 5 depicts an alternative embodiment in which the face seal 72 is provided by a raised feature that is over-molded, deposited, or otherwise defined on the front ferrule end face 48. The depicted face seal 72 may be made from any highly elastomeric and water resistant material, such as a silicone gel, a rubber polymer extended with oil as silicone, a fluoroelastomer, or any other suitable material, such as a material having a hardness of less than Shore A 40. In either embodiment, the face seal 72 encircles the opening 51 of ferrule bore 42 on the front ferrule end face 48 so that when two ferrules 32 engage each other to form a connection, the opposing face seals 72 form a sealing interface that isolates each of the front openings 51 from the external environment. Fiber optic connectors 30 configured to connect multicore optical fibers, or fiber optic cables including multiple hollow-core optical fibers 10, may include separate face seals 72 around each front end face ferrule bore opening 51, or one or more face seals 72 that surround multiple front end face ferrule bore openings 51.

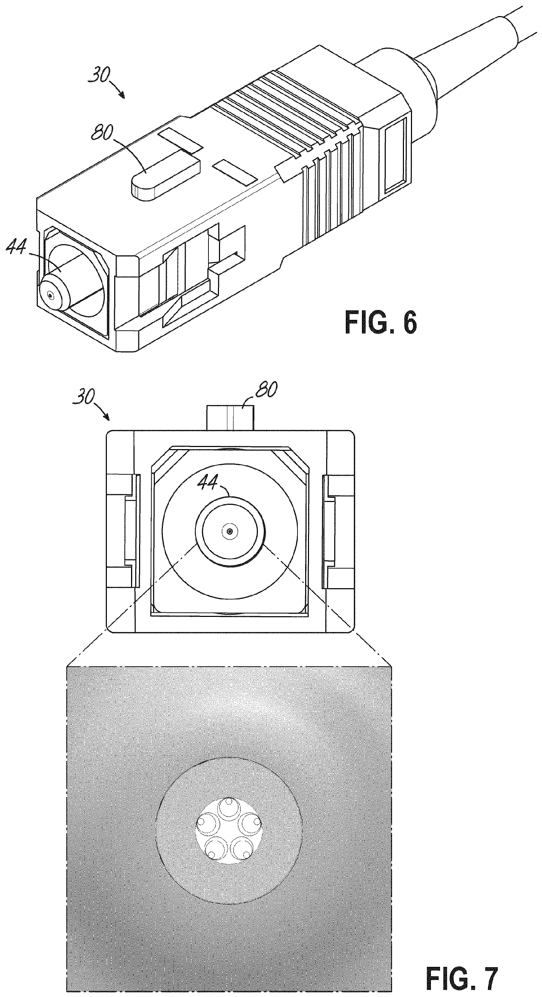

Fig. 6 presents a perspective view of an exemplary fiber optic connector 30 including a connector key 80, and Fig. 7 presents a plane view of the fiber optic connector 30 from the front thereof with the connector key 80 projecting from an upper portion of the fiber optic connector 30. The fiber optic connector 30 is depicted as an SC connector having similar features as a standard SC connector. To minimize insertion loss, it may be desirable to orient the hollow-core optical fiber 10 in the fiber optic connector 30 in a consistent manner. A consistent orientation of the hollow-core optical fiber 10 may be achieved by aligning the orientation of the hollow-core optical fiber 10 relative to the connector key 80. For example, in the depicted embodiment, the hollow-core optical fiber 10 has five structural tubes 14 arranged circumferentially and is oriented in the connector so that uppermost structural tube 14 is vertically aligned with the key 80. That is, the hollow-core optical fiber 10 may be rotationally oriented so that the connector key 80 is aligned with a mirror symmetry axis of the structural tube pattern. A consistent orientation of the end face 61 of hollow-core optical fiber 10 (e.g., so that a mirror symmetry axis of the end face 61 is aligned with the connector key 80 in each fiber optic connector 30) may result in the structural tubes 14 of two connected hollow-core optical fibers 10 being rotationally aligned each time a connection is made.

The hollow-core optical fiber end face is preferably cleaved flat with minimal angle variation and chipping so that the end faces 61 of the hollow-core optical fibers 10 are normal to the optical axis 23 of thereof. One suitable method for cleaving hollow-core optical fibers 10 involves nano-perforation of the hollow-core optical fiber 10 by ultrafast laser pulses. As part of the process, a series or array of laser holes may be positioned at a prescribed distance from the reference handler and another prescribed distance from the ends of the hollow-core optical fibers 10. The spacing of the perforated holes can be adjusted to ensure the fiber is strong enough to be inserted into a micro-hole of ferrule with resistance.

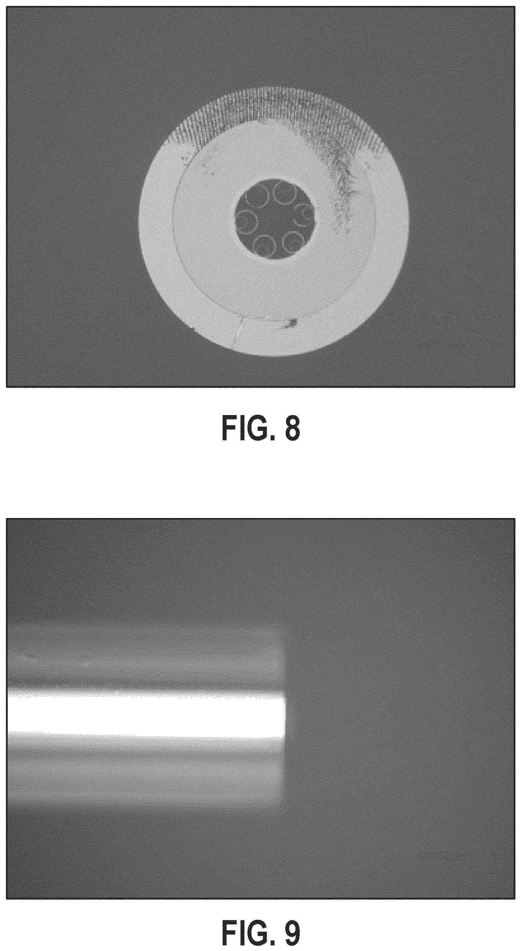

Figs. 8 and 9 depict an exemplary hollow-core optical fiber that has been cleaved using the above-described laser nano-perforation process. As can be seen, the hollow-core optical fiber 10 has a low cleave angle (e.g., a cleave angle in the range of $\pm 0.5°$) and a flat surface (e.g., an end face free of chips and hackles), but may include laser perforation marks. To prevent contamination of the hollow-core 18, the end face 61 of the hollow-core optical fiber 10 may be temporarily masked by a removable film during the assembly process. In any case, no polishing of the end face 61 is required. The finished fiber optic connector 30 may be covered with a tight-fitting dust cap when not in use.

A bonding agent may be applied to the ferrule 32 such that the entire length of the bore 42 is wetted with bonding agent during installation of the hollow-core optical fiber 10. Exemplary bonding agents may include, but are not limited to, hot melt, two-part epoxy, and ultraviolet (UV) cured epoxy. The hollow-core optical fibers 10 referenced to the handler may then be inserted into the bore 42 of ferrule 32 until the cleave features (e.g., perforation holes) are positioned at or proximate to the front ferrule end face 48.

The precision with which the cleave features are positioned may be improved by taking a measurement of the ferrule length to adjust the distance needed between the reference handler and the back of the ferrule 32. Other methods may also be employed to improve the positioning of the cleave features relative to the front ferrule end face 48. The bonding process may then be completed. The front ferrule end face 48 may be kept free of bonding agent by controlling the installation parameters or by hot air wiping the ferrule face during and after fiber installation. In an alternative embodiment, a portion of the hollow-core optical fiber 10 may be inserted into the ferrule bore 42 prior to adding the bonding agent. The boding agent may then be applied to the tapered inlet 65, and the remaining length of hollow-core optical fiber 10 inserted into the ferrule bore 42. Once the cleave features have been positioned and fibers bonded, the fibers may be tension stressed using a suitable mechanical means to produce a cleaved fiber end face 61 at or proximate to (e.g., below) the front ferrule end face 48.

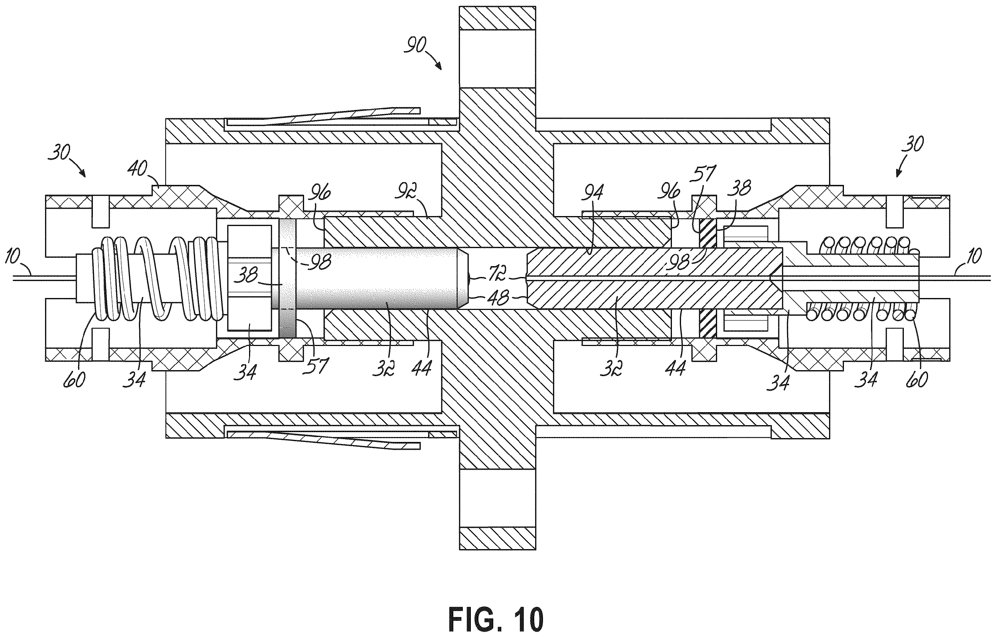

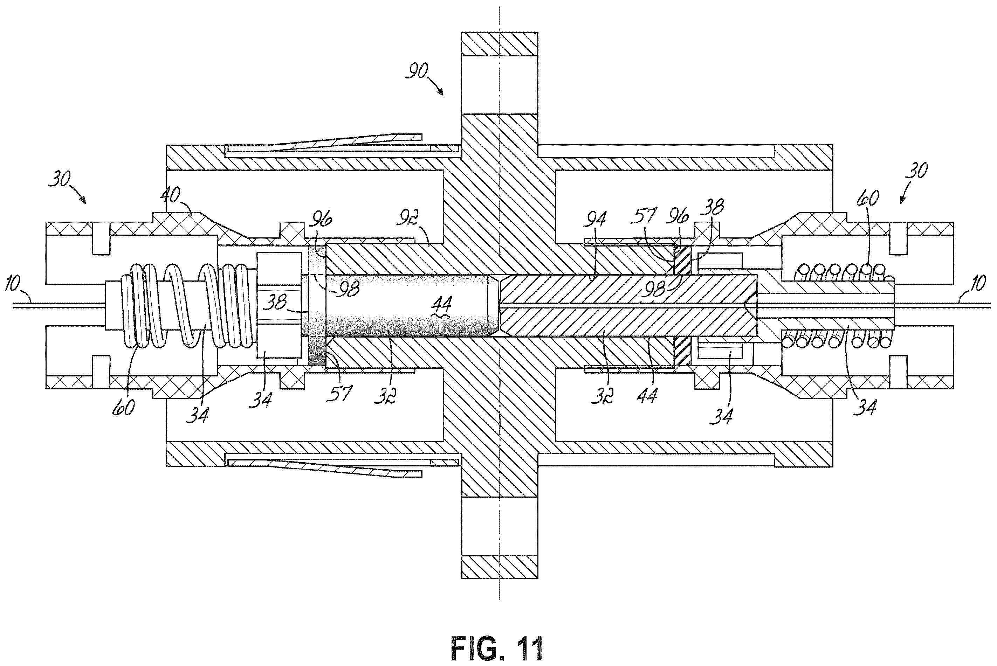

Fig. 10 depicts a pair of fiber optic connectors 30 being inserted into an exemplary mating adapter 90 prior to engagement of the ferrules 32. Fig. 11 depicts the pair of fiber optic connectors 30 after the connectors 30 have been fully inserted into the mating adapter 90 and the ferrules 32 are fully engaged. The mating adapter 90 includes a sleeve 92 configured to receive the ferrules 32. The sleeve 92 includes an inner surface 94 and end surfaces 96 at each end thereof. The inner surface 94 may define a cylindrical bore configured to receive and align the ferrules 32.

As best shown by Fig. 11, when a connector 30 is fully inserted into the mating adapter 90, the front surface 57 of shaft seal 38 may engage the end surface 96 of sleeve 92 to form a sealing interface therebetween. The shaft seal 38 may also include an inner surface 98 that forms a sealing interface with the outer surface 44 of ferrule 32. The shaft seals 38 may thereby prevent dust and liquid contamination from entering the fiber optic connector 30 through any gaps that exist between the outer surfaces 44 of the ferrules 32 and the inner surface 94 of sleeve 92. The mated fiber optic connectors 30 depicted by Fig. 11 also show the face seals 72 of ferrule end faces 48 engaged with each other. The shaft seals 38 and face seals 72 may thereby work cooperatively to provide multiple barriers to contamination entering the end faces 61 hollow-core optical fibers 10 from the external environment.

For embodiments in which the shaft seal 38 is highly compressible, the resistance provided by the shaft seal 38 may be much lower than the force provided by the spring 60 of the fiber optic connector 30. However, in some embodiments, the spring 60 may be configured to provide an increased force to compensate for any resistance provided by the shaft seal 38.

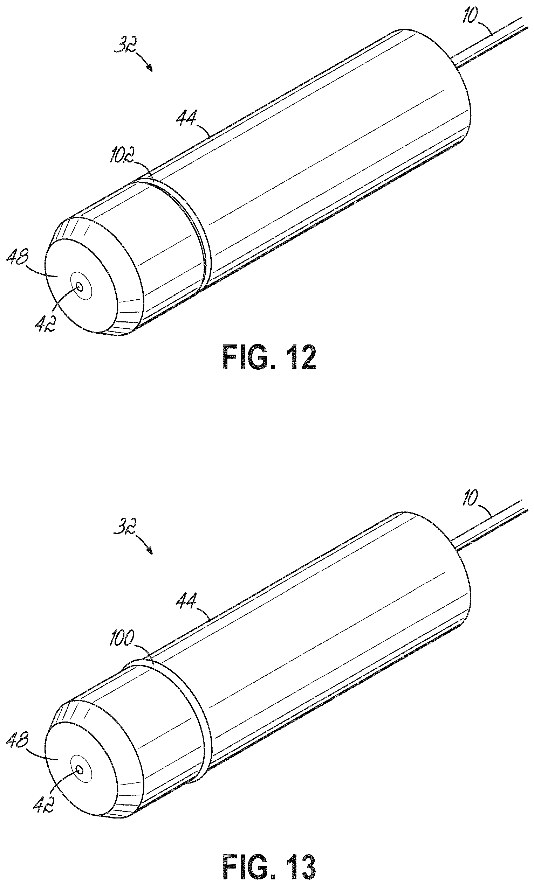

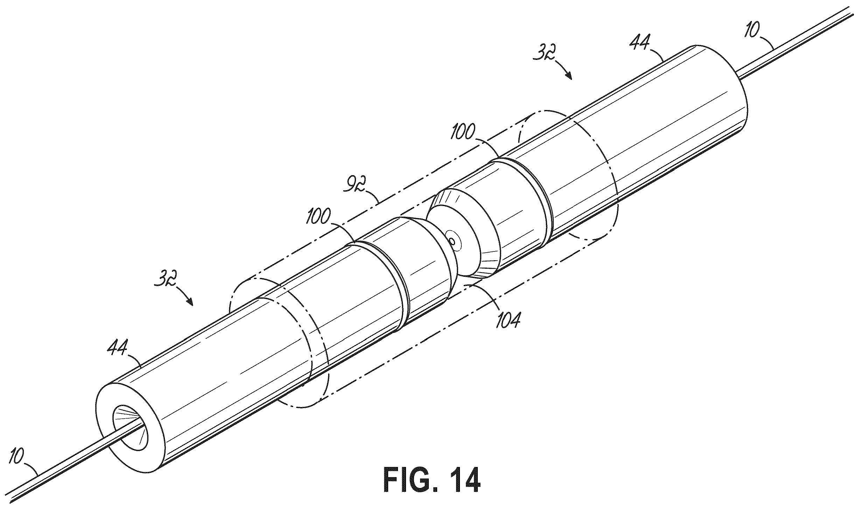

Figs. 12-14 depict an embodiment including an O-ring seal 100, which may be used in addition to or in place of one or more of the shaft seal 38 and face seal 72. In this embodiment, the outer surface 44 of ferrule 32 may include a circumferential channel 102 configured to receive the O-ring seal 100. The sleeve 92 may be a solid sleeve or a slit sleeve (not shown) with the slit sealed. Fig. 14 shows the ferrules 32 in a mated state. The O-ring seal 100 of the mated ferrules 32 provides a sealing interface with the inner surface 104 of the sleeve 92 that prevents foreign matter from entering the space inside the sleeve 92 between the O-ring seals 100. This sealed space includes the hollow-core optical fiber end faces 61. The O-ring seal 100 may be made from any highly elastomeric and water-resistant material, such as a silicone gel, a rubber polymer extended with oil as silicone, a fluoroelastomer, or any other suitable material, such as a material having a hardness of less than Shore A 40.

The above disclosure describes seals in multiple positions (e.g., three positions) within a fiber optic coupling system. It should be understood that the disclosed seals may be used individually, as a combination of two seals, or as a combination of more than two seals, depending on the reliability requirement. Although the embodiments are described herein with reference to an SC connector, it should be further understood that the disclosed embodiments may be used with other types of connectors, such as LC, ST, FC, and MU connectors. Moreover, the disclosed concepts may be extended to multifiber connectors such as MPO/MTP and MMC connectors. For example, the features providing the face seals 72 in the ferrule end face 48 may encompass multiple fiber end faces 61.

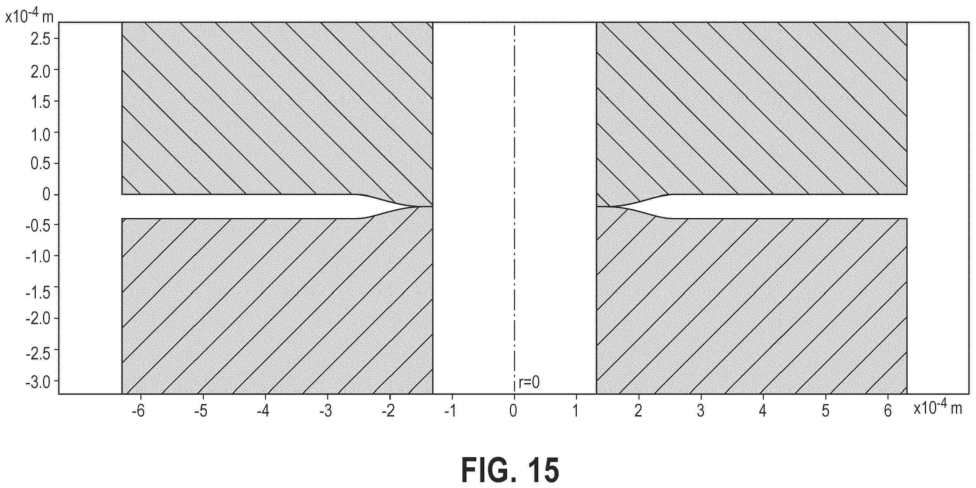

Fig. 15 depicts a geometry model for evaluation of a face seal 72 for ferrules 32 made of polyphenylene sulfide using finite element analysis. The initial state of the model positions the ferrules 32 so that the face seals 72 are just touching. Ferrule end face projections 50 were tested having radiuses in the range of about 200 $\mu$m to about 600 $\mu$m. According to International Electrotechnical Commission (IEC) standards, the minimum contact force for a 1.25 mm diameter ferrule is 2.9 N. Accordingly, simulations were performed with a 3.0 N spring force applied to the distal ends of the ferrules 32 to evaluate the sealing condition. Simulation parameters are shown in Table I. The test results indicate that polyphenylene sulfide ferrules with projections having radiuses of curvature within the test range provide good sealing when subject to the IEC minimum spring force.

| TABLE I - SIMULATION PARAMETERS | | |
|---|---|---|
| Spring Force (N) | Projection Radius ($\mu$m) | Seal Width ($\mu$m) |
| 3.0 | 200 | 15.8 |
| 3.0 | 300 | 19.0 |
| 3.0 | 400 | 21.6 |
| 3.0 | 600 | 25.0 |

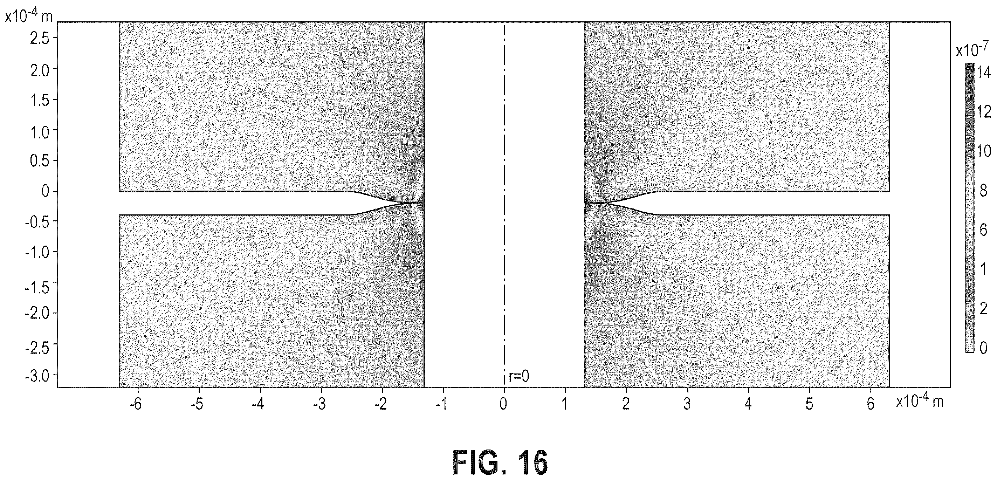

Fig. 16 depicts a graph showing the stress distribution within the ferrule 32 and indicates that the projection 50 of front ferrule end face 48 both bears the compressive force and provides a tight seal. The maximum stress observed with a 600 $\mu$m radius of curvature was about 0.12 GPa. As the spring force is increased beyond 3.0 N, the face seal 72 becomes more robust.

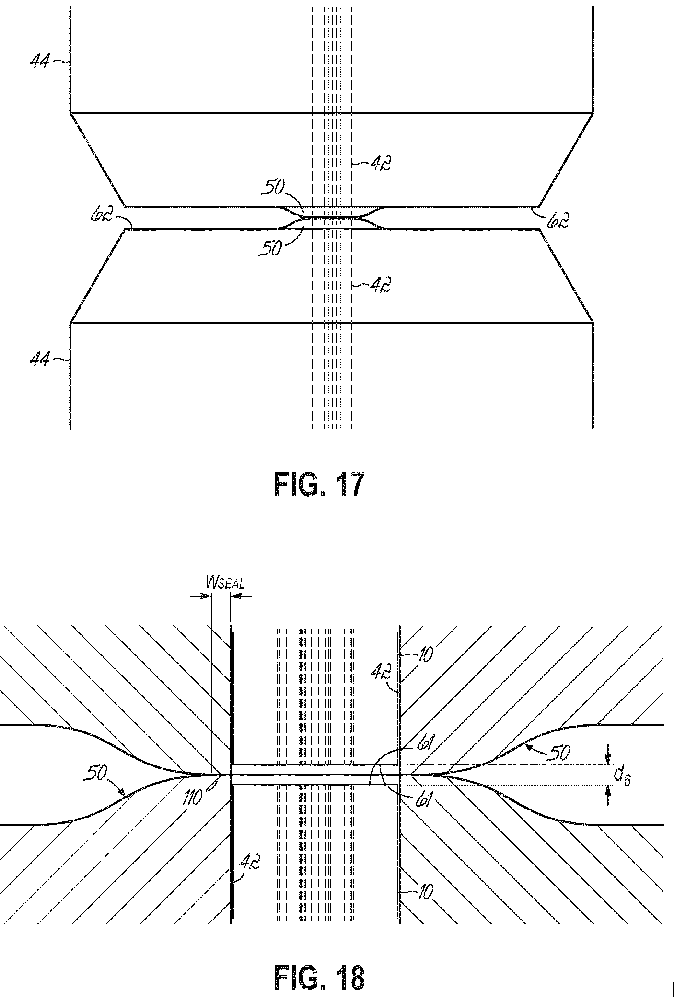

Fig. 17 depicts a pair of mated ferrules 32, and Fig. 18 depicts a close-up cross-sectional view of the mated ferrules 32 showing additional details of the sealing interface 110 between the face seals 72 of the ferrules 32. As best shown by Fig. 18, the sealing interface 110 may be defined by the area of physical contact between the face seals 72. In the depicted embodiment, the sealing interface 110 has a ring shape with a width $w_{SEAL}$. The sealing interface 110 may prevent dust and liquid contamination from entering the hollow-core optical fibers 10 through the end face 61 thereof. The end face 61 of each hollow-core optical fiber 10 may be recessed below the face seal 72 by a predetermined distance, e.g., between 1 $\mu$m and 50 $\mu$m below the face seal 72. This recess may result in the fiber end faces 61 being spaced a distance d when the face seals 72 are engaged in physical contact. The optical transmission $T$ across this spacing can be estimated by Equation 1 below:

$$T = \left[ \left( \frac{\lambda d}{2\pi\omega} \right)^2 + 1 \right]^{-1} \quad (Eqn.\,1)$$

where $\lambda$ is the wavelength, and $\omega$ the mode field radius. The spacing $d$ may preferably be less than 50 $\mu$m for a minimum insertion loss of less than 0.02 dB. Losses may also depend on the mode field diameter of the hollow-core optical fibers 10, with a typical mode field diameter being about 30 $\mu$m.

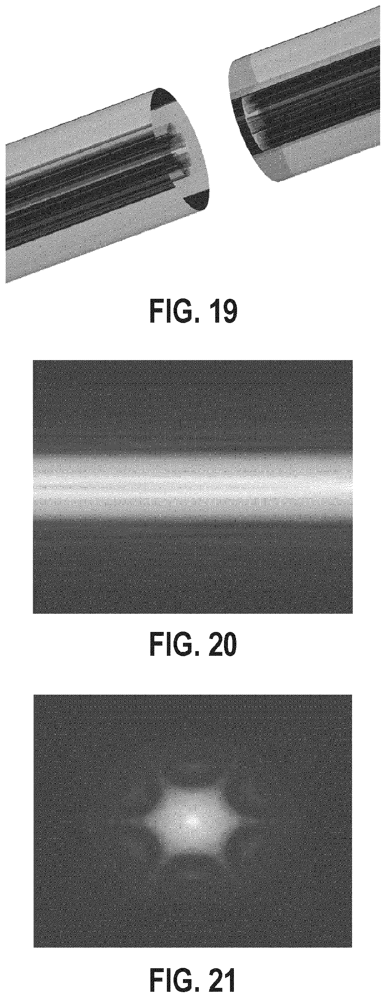

Fig. 19 depicts a hollow-core optical fiber coupling. Fig. 20 depicts a graph showing the intensity of a beam of light propagating through the coupling based on a computer simulation of the model of Fig. 19. Fig. 21 depicts a graph showing a cross-sectional view of the intensity of the beam of light of Fig. 20. The beam of light was modelled as propagating sequentially through a length of hollow-core optical fiber 10, a 50 um-long air gap, and into another length of hollow-core optical fiber 10. In the model, the structural tubes 14 of each of the hollow-core optical fibers 10 were aligned. Coupling loss modeling was conducted using BPM-Matlab, which is an open-source optical propagation simulation tool in MATLAB. MATLAB is proprietary multi-paradigm programming language and numeric computing environment developed by MathWorks, a corporation located in Natick, Massachusetts, United States. Based on the coupling loss modeling, propagation loss in the air gap segment was determined to be only 0.002 dB.

When the fiber optic connectors 30 are not in use, the connector ends may be protected by dust caps (not shown). The dust caps may have an inner diameter that provides a tight fit with the ferrule 32 and may be deep enough to compress the shaft seal 38 of fiber optic connector 30 to form a sealing interface therewith. If the fiber optic connector 30 includes an O-ring seal 100 on the ferrule side wall, the O-ring seal 100 may engage an inner side wall of the dust cap to form another sealing interface that isolates the front ferrule end face 48 from the external environment.

If the fiber optic connectors 30 are installed in a patch panel and some ports are not connected, the open ports may be plugged with dust caps to seal the opening of the mating adapter 90. The ferrule outer surface 44, front ferrule end face 48, and other selected surfaces of the fiber optic connector 30 and mating adapter 90 may be chemically treated so that a hydrophobic layer is formed on the surfaces in question. This hydrophobic layer may further reduce the probability of liquid ingression into the hollow-core optical fiber 10.

The single and multi-seal fiber optic connectors 30 described herein may provide enhanced reliability against contaminations from dust and liquid as compared to known methods of connecting hollow-core optical fibers 10. Preventing contaminants from entering hollow-core optical fibers 10 may be necessary to enable large scale deployment of hollow-core optical fiber 10, particularly in hyperscale datacenters. The disclosed seals may also effectively reduce moisture permeation into hollow-core optical fiber 10. In cases where liquid immersion cooling is required, reliably sealed fiber optic connectors 30 may provide a future proof solution for connecting hollow-core optical fibers 10. The disclosed fiber optic connectors 30 also provide lower insertion loss and lower cost than known connectors that rely on on glass plate sealed ferrules to prevent contamination. Additionally, the disclosed connector components and assembly processes are amenable to large scale production.

While the present disclosure has been illustrated by the description of specific embodiments thereof, and while the embodiments have been described in considerable detail, it is not intended to restrict or in any way limit the scope of the appended claims to such detail. The various features discussed herein may be used alone or in any combination within and between the various embodiments. Additional advantages and modifications will readily appear to those skilled in the art. The present disclosure in its broader aspects is therefore not limited to the specific details, representative apparatus and methods and illustrative examples shown and described. Accordingly, departures may be made from such details without departing from the scope of the present disclosure.

**Claims**

1. A fiber optic coupling system for hollow-core optical fibers, comprising:
   one or more fiber optic connectors, each fiber optic connector including:

   a ferrule having an end face, an outer surface that defines a center axis of the ferrule, and a bore with an opening on the end face;
   a hollow-core optical fiber positioned in the bore of the ferrule; and
   one or more seals each operatively coupled to the ferrule and configured to form a sealing interface that isolates the opening of the bore from an external environment when the fiber optic connector is operatively coupled to another component of the system.

2. The system of claim 1, wherein the other component is one of a mating adapter, a second fiber optic connector, and a dust cap.

3. The system of claim 1 or 2, wherein the one or more seals includes a face seal operatively coupled to the end face of the ferrule.

4. The system of claim 3, wherein the end face of the ferrule includes a projection having a surface that is radially symmetric with respect to the center axis, and the face seal is provided by a circumferential ring defined by an intersection of the bore of the ferrule and the surface of the projection.

5. The system of claim 4, wherein the hollow-core optical fiber includes a fiber end face, and the hollow-core optical fiber is positioned in the bore of the ferrule so that the fiber end face is recessed below the circumferential ring.

6. The system of any of claims 3-5, wherein the face seal includes a raised feature defined by depositing a material onto the end face of the ferrule.

7. The system of any of claims 3-6, wherein the one or more fiber optic connectors includes a first fiber optic connector and a second fiber optic connector, and the face seal of the first fiber optic connector forms the sealing interface with the face seal of the second fiber optic connector.

8. The system of any of claims 1-7, wherein the one or more seals includes a shaft seal having an inner surface that is operatively coupled to the outer surface of the ferrule.

9. The system of claim 8, wherein the shaft seal further includes a front surface, and further comprising:
a sleeve including an end surface that forms the sealing interface with the front surface of the shaft seal.

10. The system of any of claims 1-9, wherein the outer surface of the ferrule includes a circumferential channel, and the one or more seals includes an O-ring seal positioned in the circumferential channel.

11. The system of claim 10, further comprising:
a sleeve including an inner surface that forms the sealing interface with the O-ring seal.

12. The system of any of claims 1-11, wherein each fiber optic connector includes a key, the hollow-core optical fiber includes a fiber end face having a mirror symmetry axis, and the fiber end face is rotationally oriented so that the mirror symmetry axis is aligned with the key of the fiber optic connector.

13. A method for coupling hollow-core optical fibers with a fiber optic coupling system according to any preceding claim, wherein the method comprises for each of the one or more fiber optic connectors:

positioning a hollow-core optical fiber in a bore of the ferrule;
coupling one or more seals to the ferrule of the fiber optic connector;
configuring one or more seals to form a sealing interface that isolates an opening of the bore in an end face of the ferrule from an external environment when the fiber optic connector is operatively coupled to another component of the system.

FIG. 1

FIG. 2

**FIG. 3**

FIG. 4

**FIG. 5**

**FIG. 6**

**FIG. 7**

FIG. 8

FIG. 9

**FIG. 10**

FIG. 11

**FIG. 12**

**FIG. 13**

EP 4 685 535 A1

FIG. 14

FIG. 15

FIG. 16

**FIG. 17**

**FIG. 18**

FIG. 19

FIG. 20

FIG. 21

**EUROPEAN SEARCH REPORT**

Application Number

EP 25 19 1041

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/350135 A1 (KAMITSUNA HIDEKI [JP] ET AL) 2 November 2023 (2023-11-02)<br>* figure 9 *<br>* paragraph [0035] *<br>* paragraphs [0073] - [0074] *<br>----- | 1-13 | INV.<br>G02B6/38 |
| X | US 2023/168436 A1 (LOGUNOV STEPHAN LVOVICH [US] ET AL) 1 June 2023 (2023-06-01)<br>* figures 18A, 18B *<br>* paragraph [0086] *<br>* paragraph [0089] *<br>----- | 1-13 | |
| X | EP 4 361 688 A1 (NKT PHOTONICS AS [DK]) 1 May 2024 (2024-05-01)<br>* figure 1 *<br>* paragraph [0090] *<br>----- | 1-13 | |
| A | US 2015/212280 A1 (MIEVILLE JACQUES [CH] ET AL) 30 July 2015 (2015-07-30)<br>* figures 1-3 *<br>----- | 1-13 | |
| A | US 6 305 849 B1 (ROEHRS MICHAEL [US] ET AL) 23 October 2001 (2001-10-23)<br>* figure 7 *<br>----- | 1-13 | **TECHNICAL FIELDS SEARCHED (IPC)**<br><br>G02B |

The present search report has been drawn up for all claims

| Place of search | Date of completion of the search | Examiner |
|---|---|---|
| The Hague | 6 November 2025 | Dregely, Daniel |

EPO FORM 1503 03.82 (P04C01)

## ANNEX TO THE EUROPEAN SEARCH REPORT
## ON EUROPEAN PATENT APPLICATION NO.

EP 25 19 1041

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2025

| Patent document cited in search report | | Publication date | Patent family member(s) | | Publication date |
|---|---|---|---|---|---|
| US 2023350135 | A1 | 02-11-2023 | CN | 115943333 A | 07-04-2023 |
| | | | EP | 4206762 A1 | 05-07-2023 |
| | | | JP | WO2022044891 A1 | 03-03-2022 |
| | | | TW | 202212877 A | 01-04-2022 |
| | | | US | 2023350135 A1 | 02-11-2023 |
| | | | WO | 2022044891 A1 | 03-03-2022 |
| US 2023168436 | A1 | 01-06-2023 | US | 2023168436 A1 | 01-06-2023 |
| | | | US | 2025306291 A1 | 02-10-2025 |
| EP 4361688 | A1 | 01-05-2024 | EP | 4361688 A1 | 01-05-2024 |
| | | | EP | 4609241 A1 | 03-09-2025 |
| | | | WO | 2024088728 A1 | 02-05-2024 |
| US 2015212280 | A1 | 30-07-2015 | CH | 706931 A1 | 14-03-2014 |
| | | | EP | 2895903 A1 | 22-07-2015 |
| | | | HK | 1207688 A1 | 05-02-2016 |
| | | | US | 2015212280 A1 | 30-07-2015 |
| | | | WO | 2014041450 A1 | 20-03-2014 |
| US 6305849 | B1 | 23-10-2001 | US | 6305849 B1 | 23-10-2001 |
| | | | US | 6357929 B1 | 19-03-2002 |
| | | | US | 6371660 B1 | 16-04-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63673894